# EUROPÄISCHE PATENTANMELDUNG

(11) **EP 2 108 278 A1**
(43) Veröffentlichungstag der Anmeldung: **14.10.2009**
(21) Anmeldenummer: 08007027.9
(22) Anmeldetag: 09.04.2008
(51) Int. Cl.: A45D 34/00, A45D 40/00

(54) **Behälter für ein Kosmetikum mit einer beschichteten Mantelfläche**

(71) Anmelder: GEKA BRUSH GMBH, 91572 Bechhofen-Waizendorf (DE)
(72) Erfinder: Dumler, Norbert, 91522 Ansbach (DE); Fonteiner, Ingrid, Dr., 91781 Weissenburg (DE); Appold, Reinhard, 91632 Wieseth (DE)
(74) Vertreter: Bauerschmidt, Peter

(57) **Zusammenfassung**

Der Behälter (1) ist zur Aufnahme eines Kosmetikums bestimmt. Er umfasst einen an einer ersten axialen Stirnseite in eine Behälteröffnung (8) mündenden Behälterhals (3), einen eine äußere Mantelfläche (6) aufweisenden Aufnahmebereich (4) für das Kosmetikum und einen den Aufnahmebereich (4) an einer zweiten axialen Stirnseite abschließenden Boden (5). In einem Übergangsbereich zwischen dem Behälterhals (3) und dem Aufnahmebereich (4) ist ein zum Aufnahmebereich (4) hin nach außen vorspringender Absatz (11) gebildet. Der Boden (5) ist mit einer von außen zugänglichen Vertiefung (15) versehen, die sich axial in Richtung der Behälteröffnung (8) erstreckt. Die Mantelfläche (6) reicht bis unmittelbar an einen Umfangsrand (14) des Bodens (5) heran und ist mit einer bis unmittelbar an diesen Umfangsrand (14) heranreichenden, gesondert aufgebrachten Beschichtung (7) versehen.

## Beschreibung

Die Erfindung betrifft einen Behälter für ein Kosmetikum mit einem an einer ersten axialen Stirnseite in eine Behälteröffnung mündenden Behälterhals, einem eine äußere Mantelfläche aufweisenden Aufnahmebereich für das Kosmetikum und einem den Aufnahmebereich an einer zweiten axialen Stirnseite abschließenden Boden.

Derartige Behälter werden vielfältig zur Aufnahme verschiedener kosmetischen Substanzen, beispielsweise von Mascara, Haarfärbemittel, Nagellack, Lipgloss oder dergleichen, verwendet. Um einen ansprechenden äußeren Eindruck zu erzielen, sind diese Behälter außen an ihrer Mantelfläche oft mit einer Verzierungsbeschichtung, insbesondere mit einer Heißfolienprägung, versehen. Dabei ergeben sich aber fertigungstechnologische Grenzen, da die Behälter zum nachträglichen Aufbringen dieser Verzierungsbeschichtung von außen gefasst werden müssen, insbesondere wenn diese Behälter als Kunststoff-Blaskörper mit Hinterschneidungen im Behälterinneren ausgeführt sind. Dann ist eine Fixierung des Behälters während des Beschichtungsprozesses mittels eines in den Behälter eingesteckten Haltedorns oder -körpers technisch nicht möglich. Solche Behälter werden deshalb während des Beschichtungsprozesses außen an der Mantelfläche gefasst, so dass sie an diesen Stellen, bei denen es sich üblicherweise um den unteren Rand der Mantelfläche handelt, nicht mit der Verzierung beschichtet werden können.

Die Aufgabe der Erfindung besteht nun darin, einen Behälter der eingangs bezeichneten Art anzugeben, der mit einer besonders ansprechenden Verzierungsbeschichtung versehen ist.

Zur Lösung dieser Aufgabe wird ein Behälter entsprechend den Merkmalen des Patentanspruchs 1 angegeben. Bei dem erfindungsgemäßen Behälter ist in einem Übergangsbereich zwischen dem Behälterhals und dem Aufnahmebereich ein zum Aufnahmebereich hin nach außen vorspringender Absatz gebildet. Weiterhin ist der Boden mit einer von außen zugänglichen Vertiefung versehen ist, die sich axial in Richtung der Behälteröffnung erstreckt. Außerdem reicht die Mantelfläche bis unmittelbar an einen Umfangsrand des Bodens heran und ist mit einer bis unmittelbar an diesen Umfangsrand heranreichenden, gesondert aufgebrachten Beschichtung versehen.

Bei dem erfindungsgemäßen Behälter kann die außen aufgebrachte Verzierungsbeschichtung insbesondere auch bis unmittelbar an den unteren Rand der Mantelfläche reichen. Vorzugsweise kann die Beschichtung also auch ganzflächig auf der Mantelfläche angebracht sein, d.h. sie reicht oben vom Umfangsrand des Absatzes bis unten zum Umfangsrand des Bodens. Dies wird durch die am Boden zusätzlich vorgesehene Vertiefung ermöglicht. Damit kann der Behälter während des Beschichtungsprozesses an beiden axialen Stirnseiten mittels zweier Haltedorne oder -stößel, von denen einer in die Behälteröffnung des Behälterhalses und der andere in die Vertiefung am Boden eingreift, gehalten werden. Damit bleibt anders als bei den bislang bekannten derartigen Behältern kein Bereich, der aufgrund einer außen an der Mantelfläche angreifenden Haltezange nicht mit einer nachträglichen Verzierungsbeschichtung versehen werden kann. Der erfindungsgemäße Behälter hat somit ein besonders ansprechendes Erscheinungsbild.

Vorteilhafte Ausgestaltungen des erfindungsgemäßen Behälters ergeben sich aus den Merkmalen der von Anspruch 1 abhängigen Ansprüche. Gemäß einer bevorzugten Ausgestaltung verengt sich die Vertiefung nach innen und hat insbesondere eine konische Seitenwand. Dadurch kann ein Haltedorn oder -stößel in diese Vertiefung eingeklemmt werden, so dass eine gute Halterung und Zentrierung des Behälters während des Beschichtungsprozesses resultiert.

Gemäß einer weiteren bevorzugten Ausgestaltung ist die Mantelfläche zylinderförmig oder kegelstumpfförmig oder hat eine Umfangsfläche oder Umfangsteilfläche eines Körpers mit bezogen auf eine Behälterlängsachse eckigem Querschnitt, insbesondere eines Quaders oder eines Tetraeders. Die Mantelfläche kann weitgehend beliebige Querschnittsgeometrien annehmen. So sind auch mehreckige, insbesondere drei- oder fünfeckige, Querschnittsgeometrien möglich. Auch eine ovale Querschnittsgeometrie ist denkbar. Dabei kann sich die Mantelfläche auch bei den mehreckigen oder ovalen Querschnittsgeometrien zu einer axialen Stirnseite hin verjüngen. Die Halterung und die Beschichtung des Behälters ist auch bei diesen Behälterformen wie vorstehend beschrieben möglich. Insbesondere kann aufgrund der zur Halterung am Behälterboden vorgesehenen Vertiefung jeweils eine Beschichtung bis unmittelbar an den Umfangsrand des Bodens erfolgen.

Gemäß einer weiteren bevorzugten Ausgestaltung ist die Beschichtung als Prägung, insbesondere als Heißfolienprägung ausgeführt. Damit lässt sich die Mantelfläche in vielfältiger und vor allem auch sehr ansprechender Weise gestalten. Insbesondere umfasst die Beschichtung also eine Prägebeschichtung, vorzugsweise eine Heißfolienprägebeschichtung. Ein mehrfaches, insbesondere zweimaliges Überprägen ist ebenfalls möglich. Weiterhin kann die Beschichtung eine Deck- oder Schutzschicht, insbesondere eine Schutzlackschicht, umfassen, die auf eine z.B. als metallisierte Beschichtung ausgeführte Grundbeschichtung aufgebracht ist. Ein derartiger Schutzlack ist gegen eine Abnutzung der Beschichtung vorgesehen und beispielsweise als Sprühlack ausgeführt. Diese Deckschicht kann insbesondere transparent oder auch nur teiltransparent, also z.B. transluzent, sein. Bei Verwendung einer transluzenten Deckschicht scheint die darunter liegende erste, beispielsweise metallisierte, Beschichtung (= Grundbeschichtung) durch. Damit lassen sich visuell sehr interessante und ansprechende Effekte erzielen.

Gemäß einer weiteren bevorzugten Ausgestaltung ist am Boden eine exzentrisch angeordnete Markierung vorgesehen. Diese insbesondere als Prägemarkierung ausgeführte Markierung kann dabei vorzugsweise als in der Vertiefung angeordnete Zusatzausnehmung oder als in der Vertiefung angeordneter Vorsprung ausgebildet sein. Diese Zusatzausnehmung und dieser Vorsprung haben bevorzugt schräge Seitenwände. Die Prägemarkierung dient insbesondere der Prozessführung während der Beschichtung. Damit lässt sich sicher und vor allem auch automatisiert erkennen, an welcher Drehwinkelstellung sich der zu beschichtende Behälter gerade befindet, und wo der Beschichtungsvorgang zu beginnen und zu beenden ist.

Gemäß einer weiteren bevorzugten Ausgestaltung ist die Vertiefung mit einem Randabstand zu dem Umfangsrand angeordnet. Der Randabstand hat dabei vorzugsweise einen Wert zwischen 0,5 mm und 6,0 mm, insbesondere von 1,5 mm. Damit wird erreicht, dass der in die Vertiefung am Behälterboden eingreifende Haltedom oder -stößel zumindest in der unmittelbaren axialen Nachbarschaft zum Behälterboden radial nicht über Umfangsrand des Behälterbodens hinaus steht. Ein derartiges Überstehen könnte andernfalls zu einer Beeinträchtigung des Beschichtungsprozesses vor allem im randnahen unteren Bereich der zu beschichtenden Mantelfläche führen.

Gemäß einer weiteren bevorzugten Ausgestaltung erstreckt sich die Vertiefung in axialer Richtung zwischen 0,5 mm und 6 mm, insbesondere zwischen 1,5 mm und 6 mm. Dadurch wird ein sicherer Halt des während des Beschichtungsprozesses in die Vertiefung am Behälterboden eingreifenden Haltedorns oder -stößels erreicht.

Gemäß einer weiteren bevorzugten Ausgestaltung ist die Mantelfläche uneben und insbesondere mit mindestens einer nicht beprägten Ausnehmung versehen. Damit ergibt sich eine interessante und ansprechende Anmutung der sichtbaren äußeren Mantelfläche.

Gemäß einer weiteren bevorzugten Ausgestaltung ist als Behältermaterial ein Kunststoff vorgesehen. Ein Behälter aus Kunststoff lässt sich besonders einfach und kosteneffizient herstellen. Die zusätzlich auf der Mantelfläche vorgesehene Verzierungsbeschichtung verleiht ihm dann ein hochwertiges Erscheinungsbild.

Gemäß einer weiteren bevorzugten Ausgestaltung ist eine Ausgestaltung als Kunststoff-Blaskörper vorgesehen. Damit können besonders einfach und kosteneffizient die unterschiedlichsten Behälterformen, die insbesondere im Behälterinneren auch Hinterschneidungen aufweisen können, hergestellt werden. Insbesondere kann der Behälter als extrusionsgeblasener oder spritzgeblasener Kunststoffkörper ausgebildet sein. Außerdem ist es grundsätzlich auch möglich, dass der Behälter ein aus zwei z.B. spritzgeblasenen Teilen zusammengefügter, insbesondere zusammengeschweißter Hohlkörper ist.

Gemäß einer weiteren bevorzugten Ausgestaltung sind der Behälterhals, der Aufnahmebereich und der Behälterboden einstückig miteinander verbunden. Dies ist ebenfalls sehr effizient. Es entfallen andernfalls bei einer mehrteiligen Ausgestaltung anfallende Fügeschritte. Außerdem ist so eine sehr zuverlässige Dichtigkeit des zur Aufnahme flüssiger Substanzen bestimmten Behälters gewährleistet.

Die Erfindung betrifft außerdem auch das Herstellungsverfahren des erfindungsgemäßen Behälters, insbesondere das Verfahren zur Aufbringung der Beschichtung auf die Mantelfläche des erfindungsgemäßen Behälters.

Weitere Merkmale, Vorteile und Einzelheiten der Erfindung ergeben sich aus der nachfolgenden Beschreibung von Ausführungsbeispielen anhand der Zeichnung. Es zeigt:
- Fig. 1: ein Ausführungsbeispiel eines Behälters mit einer vollflä- chigen Beprägung an einer Mantelfläche in einer Längs- schnittdarstellung,
- Fig. 2: den Behälter gemäß Fig. 1 in einer Ansicht von unten,
- Fig. 3 und 4: zwei Ausführungsbeispiele von bis an den unteren Um- fangsrand beprägten Behältern mit unterschiedlicher Aus- gestaltung des Behälterbodens jeweils in einer Aus- schnittsdarstellung eines Längsschnitts,
- Fig. 5: ein Ausführungsbeispiel eines Behälters mit einer vollflä- chigen Beprägung an einer unterbrochenen Mantelfläche in einer perspektivischen Darstellung,
- Fig. 6: den Behälter gemäß Fig. 5 in einem während des Be- schichtungsprozesses eingespannten und gehaltenen Zu- stand in einer Längsschnittdarstellung,
- Fig. 7 bis 10: Beschichtungsvarianten für den Behälter gemäß Fig. 1 und
- Fig. 11 und 12: zwei Ausführungsbeispiele von bis an den unteren Um- fangsrand beprägten Behältern mit unterschiedlicher Aus- gestaltung des Behälterbodens jeweils in einer Aus- schnittsdarstellung eines Längsschnitts.

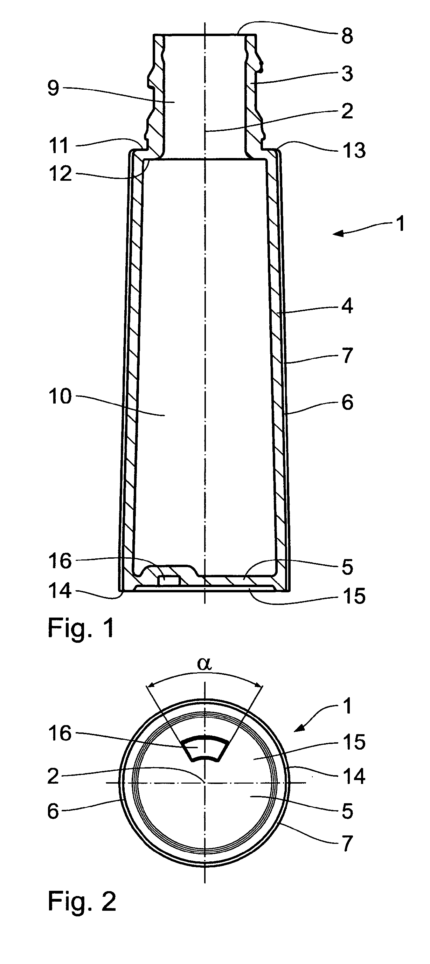

Einander entsprechende Teile sind in den Fig. 1 bis 12 mit denselben Bezugszeichen versehen.

In Fig. 1 ist ein Längsschnitt eines Ausführungsbcispiel eines Behälters 1 gezeigt, der zur Aufnahme eines Kosmetikums, wie z.B. von Mascara, Haarfärbemittel, Nagellack, Lipgloss oder dergleichen, bestimmt ist. Der Behälter 1 ist ein Blashohlkörper aus Kunststoff, der bei dem gezeigten Ausführungsbeispiel im Wesentlichen rotationssymmetrisch bezügliche einer eine Mittenlängsachse bildenden Behälterlängsachse 2 ist. Der Behälter 1 hat einen Behälterhals 3, einen Aufnahmebereich 4 und einen Behälterboden 5. Der Aufnahmebereich 4 ist annähernd hohlzylindrisch und hat eine Wand, die in Richtung der Behälterlängsachse 2 einen geringen Konizitätswinkel aufweist. An der Außenseite bildet der Aufnahmebereich 4 also eine kegelstumpfförmige Mantelfläche 6, die ganzflächig zur Verzierung mit einer gesondert aufgebrachten Beschichtung 7 in Form einer Heißfolienprägung versehen ist.

Der Behälterhals 3, der Aufnahmebereich 4 und der Behälterboden 5 sind, wie bei einem Blaskörper üblich, einstückig miteinander verbunden. Der Behälterhals 3 mündet an einer ersten axialen, d.h. in Richtung der Behälterlängsachse 2 betrachteten, Stirnseite des Behälters 1 in eine Behälteröffnung 8. Ein vom Behälterhals 3 umschlossener zylindrischen Hohlraum 9 hat eine geringere radiale Ausdehnung als ein vom Aufnahmebereich 4 umschlossener eigentlicher Aufnahmeraum 10, so dass an dem Übergangsbereich zwischen dem Behälterhals 3 und dem Aufnahmebereich 4 an der Außenseite ein eine umlaufende Schulter bildender Absatz 11 und im Behälterinneren eine Hinterschneidung 12 vorgesehen ist. Der Absatz 11 springt zum Aufnahmebereich 4 hin nach außen vor.

An dem Absatz 11 hat der Aufnahmebereich 4 einen oberen Umfangsrand 13. Ein weiterer Umfangsrand 14 ist am unteren Ende des Aufnahmebereichs 4 vorgesehen. Dieser untere Umfangsrand 14 ist Teil sowohl der Mantelfläche 6 des Aufnahmebereichs 4 als auch des Behälterbodens 5, der an der von der ersten (= oberen) axialen Stirnseite abgewandten zweiten (= unteren) axialen Stirnseite mit dem Aufnahmebereich 4 verbunden ist und letzteren hier abschließt. Die auf die Mantelfläche 6 aufgebrachte Beschichtung 7 erstreckt sich von dem oberen Umfangsrand 13 bis insbesondere unmittelbar zu dem unteren Umfangsrand 14.

Am Behälterboden 5 ist eine von außen zugängliche Bodenvertiefung 15 vorgesehen, die sich axial in Richtung der Behälteröffnung 8 erstreckt. Darüber hinaus ist der Behälterboden 5 mit einer Markierung 16 versehen, die exzentrisch am Behälterboden 5 angeordnet ist. Wie insbesondere aus der Ansicht von unten gemäß Fig. 2 hervorgeht, erstreckt sich diese Markierung 16 über einen Umfangswinkelbereich α von etwa 60°. Die Markierung 16 dient während der Aufbringung der Beschichtung 7 als automatisiert erfassbare Orientierungshilfe zur Bestimmung der exakten Umfangsposition des Behälters 1.

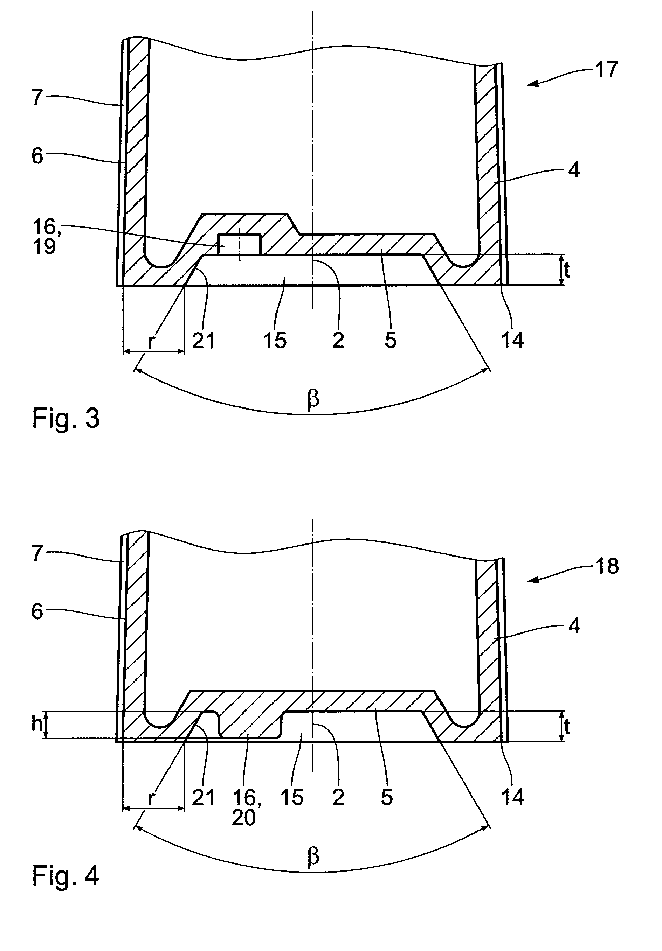

Gemäß den in Fig. 3 und 4 gezeigten Ausführungsbeispielen weiterer beschichteter Behälter 17 und 18 kann die Markierung 16 sowohl als in der Bodenvertiefung 15 zusätzlich vorgesehene weitere Ausnehmung 19 als auch als in der Bodenvertiefung 15 vorgesehener Vorsprung 20 ausgeführt sein. Der Vorsprung 20 hat dabei eine axiale Höhe h, die kleiner ist als eine axiale Tiefe t der Bodenvertiefung 15, so dass der Vorsprung 20 also nicht über die durch den unteren Umfangsrand 14 verlaufende Ebene hervor steht. Die Tiefe t nimmt bei den in Fig. 1 bis 4 gezeigten Ausführungsbeispielen Werte von etwa 0,5 mm bis 2,0 mm an, wobei aber durchaus auch noch größere Werte für die Tiefe t möglich sind. Beim Behälter 18 gemäß Fig. 4 beträgt die Tiefe t beispielsweise 1,5 mm, wohingegen die Höhe h des Vorsprungs 20 bei 1,3 mm liegt.

Die Bodenvertiefung 15 verengt sich nach innen. Sie hat eine konische Seitenwand 21. Einander gegenüberliegende Bereiche der Seitenwand 21 bilden einen Konizitätswinkel β, der bei den gezeigten Ausführungsbeispielen einen Wert von etwa 60° annimmt. Alternativ kann der Konizitätswinkel β aber auch einen anderen Wert aus einem bevorzugten Bereich zwischen 0° bis 120° haben. Außerdem reicht die Bodenvertiefung 15 nicht bis unmittelbar an den unteren Umfangsrand 14 heran. Zwischen dem Umfangsrand 14 und dem äußeren Rand der Bodenvertiefung 15 verläuft ein umlaufender Materialsteg, dessen radiale Abmessung durch einen zwischen dem Umfangsrand 14 und der Bodenvertiefung 15 vorgesehenen Randabstand r bestimmt ist. Der Randabstand r beträgt z.B. 1,5 mm.

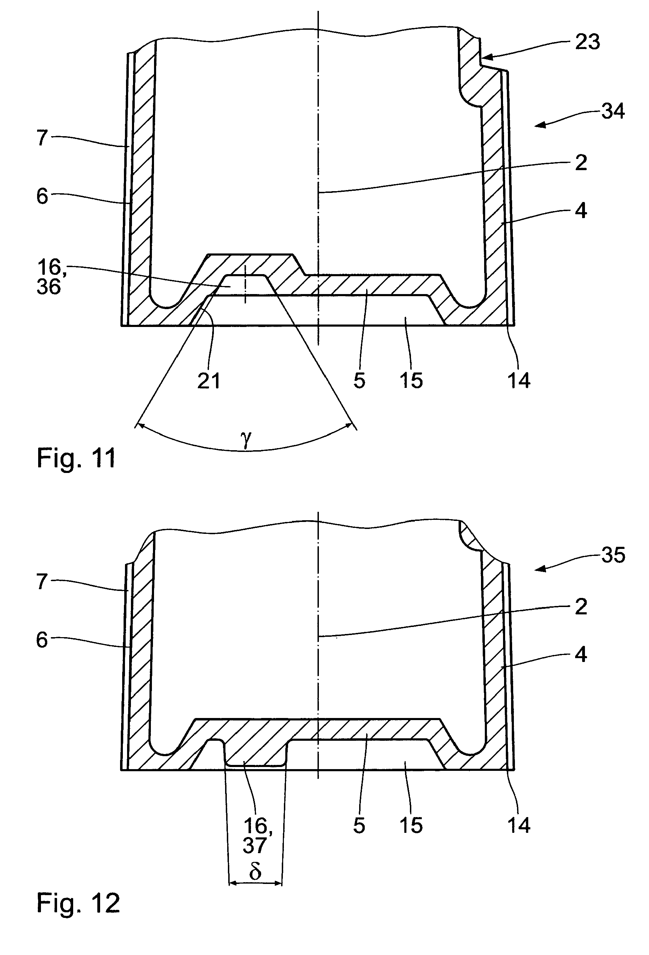

Gemäß den in Fig. 11 und 12 gezeigten Ausführungsbeispielen weiterer beschichteter Behälter 34 bzw. 35 ist die Markierung 16 wieder als in der Bodenvertiefung 15 zusätzlich vorgesehene weitere Ausnehmung 36 bzw. als in der Bodenvertiefung 15 vorgesehener Vorsprung 37 ausgeführt. Zur besseren Ausformbarkeit aus der Gussform sind die Ausnehmung 36 und der Vorsprung 37 mit schrägen Seitenwänden versehen.

Einander gegenüberliegende Seitenwände oder Seitenwandbereiche der Ausnehmung 36 sind zueinander unter einem Winkel γ angeordnet, der bei dem in Fig. 11 gezeigten Ausführungsbeispiel etwa 60° beträgt. Der Winkel γ kann aber auch einen anderen Wert aus einem bevorzugten Bereich zwischen 0° bis 60° annehmen. Die Ausnehmung 36 weitet sich in Richtung zum unteren Umfangsrand 14 auf.

Dementsprechend sind auch einander gegenüberliegende Seitenwände oder Seitenwandbereiche des Vorsprungs 37 zueinander unter einem Winkel δ angeordnet, der bei dem in Fig. 12 gezeigten Ausführungsbeispiel etwa 10° beträgt. Der Vorsprung 37 verjüngt sich in Richtung zum unteren Umfangsrand 14.

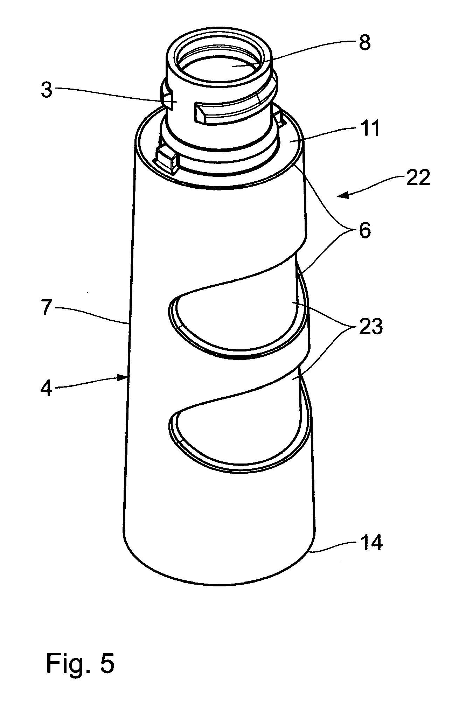

In Fig. 5 ist ein weiteres Ausführungsbeispiel eines bis unmittelbar an den unteren Umfangsrand 14 beschichteten, insbesondere mit einer Prägefolie versehenen Behälters 22 gezeigt. Im Unterschied zu den Behältern 1, 17 und 18 gemäß Fig. 1 bis 4 ist die Mantelfläche 6 des Behälters 22 nicht durchgängig beschichtet. Sie weist zwei Ausnehmungen 23 auf, die im Gegensatz zu der übrigen Mantelfläche 6 nicht beschichtet sind. Dadurch wird ein interessanter optischer Eindruck erzielt. Wichtig ist aber, dass sich auch bei dem Behälter 22 die Beschichtung 7 bis zu dem unteren Umfangsrand 14 erstreckt.

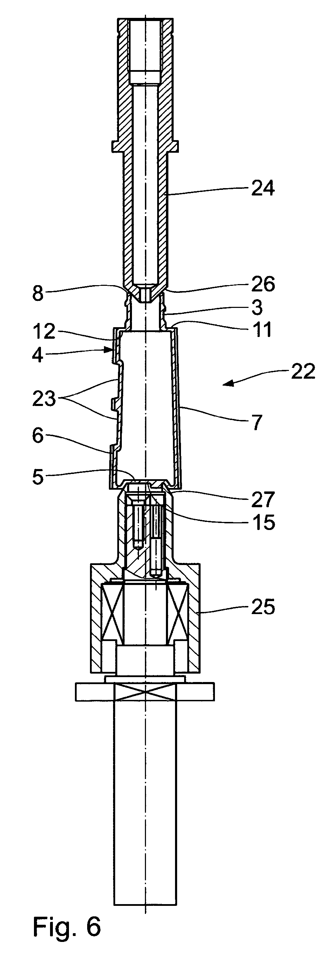

In Fig. 6 ist der Behälter 22 während des Beschichtungsprozesses dargestellt. Er ist zwischen zwei drehbaren Haltestößeln 24 und 25 eingespannt, wobei der erste Haltestößel 24 in die Behälteröffnung 8 und der zweite Haltestößel 25 in die Bodenvertiefung 15 eingreift. Beide Haltestößel 24 und 25 haben eine angefaste Spitze 26 bzw. 27 in Form eines Kegelstumpfs, wodurch ein guter Sitz vor allem des Haltestößels 25 in der die konische Seitenwand 21 aufweisenden Bodenvertiefung 15 resultiert. Der Konizitätswinkel β der Bodenvertiefung 15 und die Fase an der Spitze 27 des Haltestößels 25 sind diesbezüglich aneinander angepasst. Es ergibt sich guter Klemmsitz, so dass der eingespannte Behälter 22 mittels der Haltestößel 24 und 25, die Teile einer nicht näher gezeigten Beschichtungsmaschine sind, gedreht und dabei an der Mantelfläche 6 mit der Heißprägefolie versehen werden kann.

Aufgrund der speziellen Behälterform mit der im Behälterinneren an der Übergangsstelle zwischen dem Behälterhals 3 und dem Aufnahmeraum 4 gebildeten Hinterschneidung 12 ist eine andere Halterung, beispielsweise mittels eines komplett eingeführten und von innen im Beschichtungsbereich - also im Bereich der Mantelfläche 6 - an der Behälterwand anliegenden Halteelements nicht möglich. Es ist günstig, wenn die Wanddicke des Behälters 22 wie auch die der Behälter 1, 17, 18, 34 und 35 mindestens 0,3 mm und vorzugsweise maximal 2,5 mm beträgt. Bei Bedarf sind aber auch noch größere Wanddicken möglich.

Vorteilhafterweise hat der Haltestößel 25 außerdem in dem an den zu halternden Behälter 22 angrenzenden Bereich einen Außenumfang, der kleiner ist als der des Behälters 22 an seinem unteren Umfangsrand 14. Dadurch ist gewährleistet, dass der Haltestößel 25 das Werkzeug, das zur Beschichtung der Mantelfläche 6 axial bis mindestens an den unteren Umfangsrand 14 herangeführt werden muss, nicht behindert. Dies wird zusätzlich durch den am Behälterboden 5 zwischen dem Umfangsrand 14 und der Bodenvertiefung 15 vorgesehenen Randabstand r begünstigt.

Aufgrund der vorteilhaften Behälterform mit der Bodenvertiefung 15 ist also anders als bei den bekannten vergleichbaren Kunststoff Blashohlkörpern, die am unteren Umfangsbereich der Mantelfläche 6 mittels eines Greifers gehalten werden müssen und somit hier nicht beschichtet werden können, eine Beschichtung bis unmittelbar an den Umfangsrand 14 möglich. Dadurch ergibt sich ein optisch besonders ansprechendes und hochwertig anmutendes Erscheinungsbild der Behälter 1, 17, 18, 22, 34 und 35.

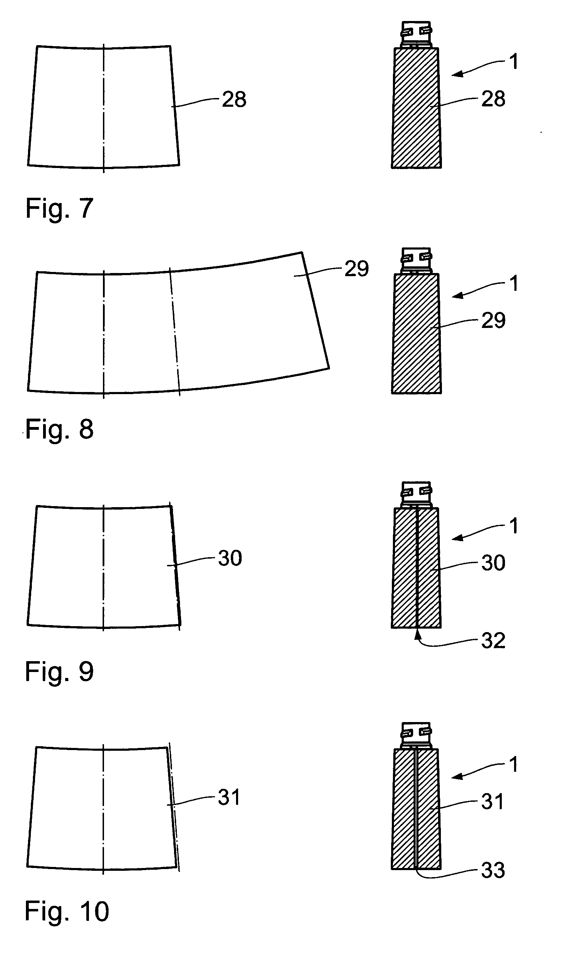

In Fig. 7 bis 10 sind beispielhaft für den Behälter 1 gemäß Fig. 1 und 2 verschiedene Beschichtungsvarianten gezeigt. Dargestellt ist jeweils ein als Beschichtung 7 vorgesehener Zuschnitt 28, 29, 30 und 31 der Heißprägefolie im abgewickelten, also noch nicht aufgebrachten, sowie im aufgebrachten Zustand. Der in Fig. 7 gezeigte Zuschnitt 28 reicht exakt einmal um den Behälter 1 herum, der in Fig. 8 gezeigte Zuschnitt 29 dagegen exakt zweimal. Der in Fig. 9 gezeigte Zuschnitt 30 reicht etwas mehr als einmal um den Behälter 1 herum, so dass im bewickelten Zustand ein kleiner Überlapp 32 resultiert. Der in Fig. 10 gezeigte Zuschnitt 31 reicht nicht ganz einmal um den Behälter 1 herum, so dass im bewickelten Zustand ein kleiner unbeschichteter Längsstreifen 33 verbleibt, der bei einer transparenter Ausführung der Behälterwand eine Kontrolle des aktuellen Füllstandes des Behälters 1 ermöglicht.

Bei allen in Fig. 7 bis 10 gezeigten Beschichtungsvarianten ist der Aufnahmebereich 4 bzw. die Mantelfläche 6 in axialer Richtung jeweils vollständig, also vom oberen bis zum unteren Umfangsrand 13 bzw. 14, von der Beschichtung 7 erfasst.

Grundsätzlich können weitere bis an den unteren Umfangsrand 14 beschichtete bzw. ganz- oder vollflächig beschichtete Behälter angegeben werden. So kann anstelle der runden Querschnittsgeometrie der in Fig. 1 bis 12 gezeigten Behälter 1, 17, 18, 22, 34 und 35 auch eine Behälterform mit einer nichtrunden, z.B. mehreckigen, abgerundeten oder ovalen, Querschnittsgeometrie vorgesehen sein. Die Querschnittsfläche kann dabei in Richtung der Behälterlängsachse 2 jeweils konstant bleiben oder sich jeweils verändern, z.B. bei gleich bleibender Form monoton verkleinern oder vergrößern. Die vorstehend beschriebenen Vorteile einer Beschichtung bis an den unteren Umfangsrand 14 heran ergeben sich dabei in gleicher Weise.

Die Behälter 1, 17, 18, 22, 34 und 35, insbesondere deren jeweilige Aufnahmebereiche 4, können wahlweise mit einem transparenten Schutzlack mit einer Schichtdicke von 2 µm bis 30 µm, insbesondere von 12 µm, versehen werden, damit ein Abrieb der Beschichtung im täglichen Gebrauch vermieden wird.

Bei den vollflächig beschichteten Behältern 1, 17, 18, 22, 34 und 35 können zusätzliche visuelle Effekte erzielt werden, indem es sich bei der ersten Beschichtung um eine metallisierte Schicht mit Schutzlack handelt. Die Schichtdicke beträgt 1 µm bis 5 µm, insbesondere 2,5 µm.

Besondere Metallic-Farbeffekte können dadurch erreicht werden, indem in einem zweiten Arbeitsgang auf die metallisierte Beschichtung durch Siebdruck und /oder Tampondruck eine zweite Farbschicht aufgetragen wird, welche es zulässt, dass die erste metallische Beschichtung noch durch die zweite Farbschicht durchscheint. Bei einer Siebdruckbeschichtung beträgt die Schichtdicke der aufgebrachten zweiten Farbschicht etwa zwischen 5 µm und 300 µm, vorzugsweise etwa 100 µm, bei einer Tampondruckbeschichtung dagegen etwa zwischen 5 µm und 10 µm, vorzugsweise etwa 7 µm.

## Patentansprüche

1. Behälter für ein Kosmetikum mit einem an einer ersten axialen Stirnseite in eine Behälteröffnung (8) mündenden Behälterhals (3), einem eine äußere Mantelfläche (6) aufweisenden Aufnahmebereich (4) für das Kosmetikum und einem den Aufnahmebereich (4) an einer zweiten axialen Stirnseite abschließenden Boden (5), wobei
a) in einem Übergangsbereich zwischen dem Behälterhals (3) und dem Aufnahmebereich (4) ein zum Aufnahmebereich (4) hin nach außen vorspringender Absatz (11) gebildet ist,
b) der Boden (5) mit einer von außen zugänglichen Vertiefung (15) versehen ist, die sich axial in Richtung der Behälteröffnung (8) erstreckt, und
c) die Mantelfläche (6) bis unmittelbar an einen Umfangsrand (14) des Bodens (5) heranreicht und mit einer bis unmittelbar an diesen Umfangsrand (14) heranreichenden, gesondert aufgebrachten Beschichtung (7) versehen ist.

2. Behälter nach Anspruch 1, **dadurch gekennzeichnet, dass** die Vertiefung (7) sich nach innen verengt und insbesondere eine konische Seitenwand (21) hat.

3. Behälter nach Anspruch 1, **dadurch gekennzeichnet, dass** die Mantelfläche (6) zylinderförmig oder kegelstumpfförmig ist oder eine Umfangsfläche oder Umfangsteilfläche eines Körpers mit bezogen auf eine Behälterlängsachse eckigem Querschnitt, insbesondere eines Quaders oder eines Tetraeders, hat.

4. Behälter nach Anspruch 1, **dadurch gekennzeichnet, dass** die Beschichtung eine Prägebeschichtung, insbesondere eine Heißfolienprägebeschichtung, umfasst.

5. Behälter nach Anspruch 1, **dadurch gekennzeichnet, dass** die Beschichtung eine Deckschicht, insbesondere eine Schutzlackschicht, umfasst, die auf eine Grundbeschichtung aufgebracht ist.

6. Behälter nach Anspruch 5, **dadurch gekennzeichnet, dass** die Deckschicht transparent oder nur teiltransparent ist.

7. Behälter nach Anspruch 1, **dadurch gekennzeichnet, dass** am Boden eine exzentrisch angeordnete Markierung (16; 19; 20; 36; 37) vorgesehen ist.

8. Behälter nach Anspruch 7, **dadurch gekennzeichnet, dass** die Markierung (16) als in der Vertiefung (15) angeordnete Zusatzausnehmung (19; 36) oder als in der Vertiefung (15) angeordneter Vorsprung (20; 37) ausgebildet ist.

9. Behälter nach Anspruch 1, **dadurch gekennzeichnet, dass** die Vertiefung (15) mit einem Randabstand (r) zu dem Umfangsrand (14) angeordnet ist.

10. Behälter nach Anspruch 9, **dadurch gekennzeichnet, dass** der Randabstand (r) einen Wert zwischen 0,5 mm und 6,0mm, insbesondere von 1,5 mm, aufweist.

11. Behälter nach Anspruch 1, **dadurch gekennzeichnet, dass** sich die Vertiefung (15) in axialer Richtung zwischen 0,5 mm und 6 mm, insbesondere zwischen 1,5 mm und 6 mm erstreckt.

12. Behälter nach Anspruch 1, **dadurch gekennzeichnet, dass** die Mantelfläche (6) uneben ist und insbesondere mit mindestens einer nicht beprägten Ausnehmung (23) versehen ist.

13. Behälter nach Anspruch 1, **dadurch gekennzeichnet, dass** als Behältermaterial ein Kunststoff vorgesehen ist.

14. Behälter nach Anspruch 1, **dadurch gekennzeichnet, dass** eine Ausgestaltung als Kunststoff-Blaskörper vorgesehen ist.

15. Behälter nach Anspruch 1, **dadurch gekennzeichnet, dass** der Behälterhals (3), der Aufnahmebereich (4) und der Behälterboden (5) einstückig miteinander verbunden sind.
